# EUROPEAN PATENT APPLICATION

(11) **EP 1 360 906 A1**
(43) Date of publication of application: **12.11.2003**
(21) Application number: 02425284.3
(22) Date of filing: 08.05.2002
(51) Int. Cl.: A23L 1/314, A23L 1/317, A23J 3/22, A23J 3/06, A23L 1/305

(54) **Food composition, process for preparation of same and related use in a sausage-like product having a reduced fat content**

(71) Applicant: Villani S.p.A., 41051 Castelnuovo Rangone (Modena) (IT)
(72) Inventor: Butturini, Alberto, 41100 Modena (IT); Trilli, Antonio, 02040 Cerchiara (Rieti) (IT)
(74) Representative: Tansini, Elio Fabrizio

(57) **Abstract**

The present invention relates to a food composition comprising a vegetable polysaccharide, gelatin and at least one other protein and a process for preparation of a food composition. In addition, the present invention relates to use of said food composition in a sausage-like food product having a reduced fat content.

## Description

The present invention relates to a food composition and a process for preparation of a food composition. In addition, the present invention relates to use of said food composition in a sausage-like product having a reduced fat content.

The food industry has made since long attempts to produce sausage-like products having a reduced fat (lipid) content. In particular, many attempts have been made to produce sausage-like products having a reduced content of saturated lipids such as cholesterol, so as to tackle the increasingly growing demand from consumers for low-fat food products or "light products".

Nowadays, there are many consumers' categories paying attention to consumption of food products having a reduced fat or lipid content.

For instance, a consumers' category particularly careful about consumption of low-fat or light food products is represented by subjects suffering from hypercholesteremia who, for health problems, must reduce taking of lipids in their diet.

Another consumers' category particularly careful about consumption of low-fat or light food products is that formed of subjects temporarily having particular food requirements as they are submitted to a slimming diet.

Up to now, a traditional sausage-like product, i.e. a product made of minced pork or other type of meat usually stuffed into a prepared casing, such as pork mortadella for example, may contain 80% by weight for example of the so-called lean part (pink part) with respect to the finished product and 20% by weight of the so-called fat part (white part) with respect to the finished product.

One mortadella of this type may on an average contain 28% of lipids, of which 12% is contained in the so-called lean part (pink part), whereas the remaining 16% is contained in the lard pieces (white part). Typically, the pieces of lard (white part) consist of fat of pork throat.

It is known that a pork sausage or "salami" comprises about 30% by weight of lipids, about 25% by weight of proteins and about 45% by weight of water. Of the lipid component about 10% by weight comes from the so-called lean part (red part) and the remaining 20% by weight comes from the fat part (white part).

In addition, it is known that a further reduction in the caloric content in a sausage-like product can be obtained with use of raw meat materials having a reduced lipid content, such as bovine or bird meat.

Therefore, there is a need for availability on the market of food products, in particular sausage-like products, having a reduce fat or lipid content.

In particular, there is a need for availability on the market of a sausage-like food product having a reduced fat content and, at the same time, keeping all organoleptic features typical of a sausage-like food product unchanged.

The technical problem dealt with in the present patent application was to make a sausage-like food product having a reduced fat content and unchanged organoleptic features.

The Applicant has found it useful to replace the fat of animal origin present in the traditional sausage-like food products (such as salami, mortadella and true sausages) with a particular food composition having a reduced fat content without causing any alteration of the organoleptic features typical of a sausage-like food product.

It is a first object of the present invention to provide a food composition having the features set out in the appended claim 1.

The food composition being the object of the present invention comprises at least one polysaccharide, at least one animal gelatin and at least one protein.

The polysaccharide is selected from polysaccharides of vegetable origin. The polysaccharide of vegetable origin is selected from: agar-agar, carrageenin, guar, xanthans and modified celluloses.

Advantageously, the vegetable polysaccharide is selected from carrageenins.

Alternatively, mixtures of carrageenin and agar-agar in a ratio by weight included between 1:5 and 5:1 may be employed.

For instance, mixtures of carrageenin and guar in a ratio by weight included between 1:3 and 3:1 may be employed.

For instance, mixtures of carrageenin and (xanthans and/or modified celluloses) in a ratio by weight in the range of 1:5 (carrageenin : (xanthans and/or modified celluloses)) to 5:1 may be employed.

Advantageously, the animal gelatin is selected from animal gelatins of bovine meats.

Advantageously, the protein is selected from milk proteins (concentrated serum proteins WPC, at a concentration of 75% for example).

In a preferred embodiment of the present invention proteins are selected from egg proteins, such as albumin.

In another preferred embodiment of the present invention proteins are selected from myofibril proteins extracted from meat (an aqueous extract from animal tissues).

Preferably, the myofibril proteins are extracted from chicken, turkey or pork meat.

In a further preferred embodiment of the present invention proteins are selected from soybean proteins.

Preferably, the food composition of the present invention may in addition contain inulin (as a fibre supply) in an amount in the range of 0.5 to 3% by weight.

Advantageously, the food composition of the present invention contains vegetable oils such as omega-3.

In addition, the food composition of the present invention may possibly contain common additives, known to a person skilled in the art, in amounts that are compatible with human consumption.

Said additives can be for example selected from the following compounds: preservatives, bleaching agents, flavouring essences, binding and colouring agents compatible with human consumption.

The food composition of the present invention is employed to replace or reduce the amount of fats of animal origin in traditional sausage-like food products such as salami, mortadella or true sausages, for the benefit of the consumers' health.

Alternatively, the food composition of the present invention is also employed in food products of new formulation (products containing white, i.e. chicken or turkey meats, for example) without any organoleptic alteration of said products being highlighted, for the benefit of the consumers' health.

It is a further object of the present invention to provide a process for the preparation of a food composition having the features set out in the appended independent claim.

The process of the present invention comprises the following steps:
- preparing an aqueous dispersion comprising at least one vegetable polysaccharide, at least one animal gelatin and at least one protein;
- heating the prepared aqueous dispersion; and
- cooling said aqueous dispersion to obtain a gel.

In a preferred embodiment of the present invention the process involves preparation of a homogeneous and rather thick paste of calcium carbonate in water at room temperature.

Preferably, the homogeneous paste contains a carbonate (bleaching agent) amount included between 1 and 5% by weight with respect to the overall water amount employed.

Advantageously, the carbonate amount is included between 2 and 4% by weight.

For instance, together with carbonate a quantity of sodium nitrite (as a preservative) can be added in an amount ranging from 0.01 to 0.1% by weight, or a quantity of sodium or potassium nitrate.

Water is added to the concentrated sodium carbonate solution prepared separately as above described, until 100% by weight of water, as a percent reference, is reached (a total amount of 100 liters of water employed).

Added to the alkaline solution so prepared is at least one polysaccharide in an amount included between 0.1 and 6% by weight, with respect to the overall weight of the employed water, preferably in an amount included between 0.2 and 4% by weight, more preferably in the range of 1 to 3% by weight.

Once addition of the polysaccharide, at room temperature, has been completed, the obtained solution is heated from room temperature to a temperature of from 50 to 80°C, preferably from 55 to 70°C, while maintaining the mechanical stirring constant.

Preferably, the final temperature is reached in a period of time of 60 to 100 minutes.

As soon as the desired temperature (of 50 to 80°C) has been reached, at least one animal gelatin is added to the solution.

Advantageously, the amount of the added gelatin is included between 1 and 10% by weight, with reference to the total amount of the employed water, preferably between 3 and 7% by weight, while a constant stirring is maintained. Stirring of the product thus obtained goes on at a constant temperature, of 60°C for example, over a period of time of 10 to 80 minutes, preferably of 20 to 60 minutes.

At this process stage carrying out of a cooling step is essential to bring the 60°C temperature to a temperature in the range of 48 to 58°C, preferably to a temperature of 52-56°C.

At least one protein is added to the cooled product still under stirring.

Advantageously, the amount of the added protein is included between 1 and 20% by weight, relative to the overall weight of the employed water, preferably between 5 and 12% by weight, stirring being still constant.

For example, should the protein be dry egg albumen the amount by weight is included between 1 and 10% by weight, preferably between 2 and 6% by weight.

For example, should the protein be milk serum protein the amount by weight is in the range of 2 to 20% by weight, preferably of 5 to 16% by weight.

Should the protein be soybean protein, the amount by weight is in the range of 2 to 20% by weight, preferably of 5 to 16% by weight.

Preferably, the protein amount is added to the cooled product in a period of time of 50 to 140 minutes, preferably of 60 to 100 minutes.

The product thus obtained is heated from a temperature included between 52 and 56°C to a temperature included between 58 and 68°C. Said temperature curve is achieved over a period of time of 50 to 90 minutes, preferably of 70 to 80 minutes. Once the desired temperature has been reached the product is kept under stirring for a period of 20 to 40 minutes at a constant temperature.

At the end of the last-mentioned period of time (20-40 minutes), the preparation of said aqueous dispersion comprising at least one vegetable polysaccharide, at least one animal gelatin and at least one protein has come to an end.

The aqueous dispersion comprising at least one vegetable polysaccharide, at least one animal gelatin and at least one protein is submitted to a heating step (cooking).

Preferably, the heating step is carried out at a temperature in the range of 65 to 90°C, preferably at a temperature of 70 to 85°C.

For example, the above described aqueous dispersion is stuffed into an artificial-cellulose intestine and cooked in a bain-marie for a period of time of 30 to 70 minutes, preferably of 40 to 60 minutes so that a thick liquid is obtained.

The obtained thick liquid is necessarily cooled. Preferably, this cooling step is made in two sub-steps.

The first sub-step brings the thick liquid temperature from 65-90°C to a temperature of 20 to 30°C. For example, this first sub-step can be carried out in a continuous water stream.

The second sub-step brings temperature from 20-30°C to 4-8°C. For example, this second sub-step can be carried out in a cold store.

Once the desired temperature, of 6°C for example, has been reached, the cooled thick liquid is allowed to stand under these conditions for a period of time of 30 to 90 hours, preferably of 50 to 80 hours.

The cooling and standing step of the cooled thick liquid in a cold store is called "maturation". At the end of said maturation the cooled thick liquid becomes a gel having a solid consistency.

Maturation to a controlled temperature of the cooled thick liquid is very important because it helps in structural formation of the lattice between the employed polysaccharide components and protein components.

For example, in the above described process, possibly one or more oils provided with desirable properties from a dietetic point of view, such as vegetable oils rich in unsaturated fat acids can be added.

Clearly, while the food composition comprising vegetable oils has a higher caloric content as compared with the food composition being the object of the present invention which is devoid of vegetable oils, the former can have some usefulness from a dietetic point of view because the vegetable oils replace fats having a low unsaturation degree such as animal lard pieces, with fats having a high unsaturation degree (such as alpha and gamma linoleic acids) showing activities promoting hypolipemia and hypocholesteremia and delaying aging phenomena resulting from an oxidative damage.

Due to its mechanical features the food composition prepared as above described can be sliced, formed into cubes, or otherwise ground so that it can be included in traditional sausage-like or stuffed foods in addition to fat animal cuts or completely in place of them. Alternatively, the food composition of the present invention can be employed with foods based on bird meat.

It is a further object of the present invention to contemplate use of the above food composition for preparation of sausage-like food products having a reduced fat or lipid content.

It is a still further object of the present invention to provide a sausage-like food product such as mortadella, salami or a true sausage for example, comprising at least one meat component selected from pork and/or beef meat and the food composition of the present invention and optionally flavours, additives and other available ingredients known to a person skilled in the art.

For example, mixtures of bird meats and/or pork or beef meats can be employed.

For example, also reduced amounts of animal fat (pork fat, for example) can be employed in an admixture with the food composition of the present invention.

The amounts of the individual components forming the sausage-like food product of the present invention depend on how much animal fat is wished to be replaced in the traditional sausage-like product, while keeping the organoleptic features and working properties of the food product unchanged.

For example, the sausage-like food product may contain the food composition of the present invention in an amount included from 1 to 30% by weight of the finished product, preferably from 5 to 20%, more preferably from 8 to 15% by weight.

It is a further object of the present invention to provide a process for preparing a food product comprising at least one meat component, the food composition of the present invention and optionally animal fat, flavours and additives.

The food products of the present invention are prepared with common preparation techniques used for traditional sausage-like products.

Advantageously, the complete replacement of pork lard pieces present in traditional mortadella with the food composition being the object of the present invention brings about as a consequence, a content reduction in the overall content of lipids in the above mentioned sausage-like product from 28% to 12%, with a corresponding reduction in the caloric content of the sausage-like product itself from 317 kcal/100 g to 168 kcal/100 g without giving rise to any organoleptic alteration.

The following examples are given only by way of example for better describing the present invention without limiting it.

### EXAMPLE 1

Demineralized water to a temperature of 20°C is gradually added to 20 g of micronized calcium carbonate contained in a 200 ml beaker of Pyrex glass, while stirring is continuously carried out with a spatula until a homogeneous and rather thick paste consisting of calcium carbonate is obtained. In this step the demineralized water is employed in an amount adapted to obtain a homogenous and rather thick paste.

The calcium carbonate paste obtained as above is added to a demineralized water volume of 1000 ml (the above employed amount of water) contained in a 2000 ml beaker of Pyrex glass to a temperature of 20°C and maintained under stirring by means of a mechanical propeller stirrer, so as to obtain a homogeneous and finely divided calcium carbonate suspension.

Subsequently, 20 g of carrageenin are added altogether so as to obtain an aqueous homogeneous suspension comprising calcium carbonate and carrageenin. The temperature is gradually brought to 65°C and the suspension is kept under stirring until complete dissolution of the carrageenin.

Then 50 g of food gelatin (animal gelatin) are gradually added to the solution and stirring goes on until the animal gelatin is completely dissolved in said suspension. Finally, 120 g of concentrated powdered proteins from milk serum are gradually added and stirring is maintained until complete dispersion of said concentrated proteins.

At this point stirring is stopped and the beaker containing the preparation is immersed in a bain-marie to 80°C for 50 minutes. At the end of this period the preparation thus obtained is cooled by dipping the beaker into a bath of running water at a temperature of 15-20°C for 30 minutes.

At the end of this cooling step, the beaker containing the preparation is put to 4°C overnight.

At the end of this second cooling step the preparation takes a gel consistency within the beaker and it is subsequently removed and ground or formed into cubes for following use in a food product.

### EXAMPLE 2

20 g of carrageenin are gradually added to a demineralized water volume of 1000 ml contained in a 2000 ml beaker of Pyrex glass to a temperature of 20°C, maintained under stirring by means of a mechanical propeller stirrer, so as to obtain a homogeneous suspension. The temperature is gradually brought to 50°C and the suspension is kept under stirring until complete dissolution of the carrageenin in water.

Then 30 g of food gelatin (animal gelatin) are gradually added to the solution thus obtained and stirring goes on until the animal gelatin is completely dissolved in said first homogeneous suspension.

The preparation temperature is brought to 45°C, 100 g of dried egg albumen are gradually added and stirring is maintained until complete dispersion of said egg albumen in said preparation.

Finally, 30 g of micronized calcium carbonate are added and stirring is maintained until complete dispersion of same. A further dispersion of calcium carbonate is obtained by use of a high-speed dispersing device.

Stirring is stopped and the beaker containing the preparation is transferred to a 85°C thermostatic stove for 60 minutes.

At the end of this period the preparation is allowed to cool keeping it to room temperature (20-22°C) for 16 hours.

The beaker containing the preparation is then put to 4°C for 24 hours. At the end of the last cooling period the gel formed within the beaker is removed and ground or formed into cubes for subsequent use.

### EXAMPLE 3

500 g of frozen breasts of chicken are allowed to thaw out at 4°C overnight, then added to 100 ml of distilled water and are then finely minced by a high-speed blade blender.

The resulting paste is transferred into centrifuge bottles and centrifuged at 9000 r.p.m. for 15 minutes. At the end of centrifugation the supernatant liquor is recovered while the sediment is discarded.

The supernatant liquor corresponding to 60 ml is transferred to a 100 ml beaker of Pyrex glass and balance of the temperature with the room temperature (17-25°C) is allowed, while keeping the liquid under stirring by means of a magnetic stirrer.

Then 36 g of food gelatin and 6 g of carrageenin are added. Still keeping the suspension under stirring, the temperature is brought to 50°C within a period of time of 30 minutes by a heating plate. After further stirring for 30 minutes, the liquid is poured into a Pyrex glass tray of such sizes that a thickness of 1.5 cm is obtained.

The tray is transferred to a thermostatic stove at 78°C and maintained therein for a period of 45 minutes. At the end of this period the preparation is allowed to naturally cool to room temperature, and then transferred to a cold store at 4°C where it is kept for 48 hours. At the end of cooling, the gel formed within the tray is removed and ground or formed into cubes for subsequent use.

### EXAMPLE 4

28 g of powdered carrageenin are gradually added to a volume of demineralized water of 1000 ml contained in a 2000 ml beaker of Pyrex glass to the temperature of 25°C maintained under stirring by a mechanical propeller stirrer, so as to obtain a homogeneous suspension. The temperature is gradually brought to 55°C and the suspension is maintained under stirring until complete dissolution of the carrageenin.

Then 45 g of animal gelatin are gradually added to the solution and stirring is maintained until complete dissolution of same.

150 g of powdered soybean proteins are gradually added and stirring is maintained until complete dispersion of the product. Then 30 g of calcium carbonate are added and stirring is maintained until complete dispersion of the latter. The calcium carbonate dispersion is obtained by use of a high-speed dispersing device. Stirring is stopped and the beaker containing the preparation is transferred into a bain-marie at 82°C for 60 minutes.

At the end of this period the preparation is allowed to cool by dipping the beaker into water and ice at 5-10°C for 30 minutes. The beaker is then put to 4°C for 48 hours. At the end of cooling the gel formed within the beaker is removed and ground or formed into cubes for subsequent use.

### EXAMPLE 5

Demineralized water to a temperature of 20°C is gradually added to 20 g of micronized calcium carbonate contained in a 200 ml beaker of Pyrex glass while continuously stirring with a spatula, until a homogeneous and rather thick paste is obtained. Water is employed in amounts adapted to obtain a homogenous and rather thick paste.

The calcium carbonate paste obtained as above is added to a demineralized water volume of 1000 ml (the above employed amount of water) contained in a 2000 ml beaker of Pyrex glass to a temperature of 20°C, maintained under stirring by means of a mechanical propeller stirrer, so as to obtain a homogeneous and finely divided calcium carbonate suspension in water.

Then 20 g of carrageenin are gradually added so as to obtain a homogeneous suspension. The temperature is gradually brought to 65°C and the suspension is kept under stirring until complete dissolution of the carrageenin.

Then 50 g of food gelatin (animal gelatin) are gradually added to the solution and stirring goes on until the animal gelatin is completely dissolved.

Finally, 120 g of concentrated powdered proteins from milk serum are gradually added and stirring is maintained until complete dispersion of the product.

Subsequently 50 g of sunflower oil are added to the preparation and the mixture is emulsified by a high-speed dispersing device operated at the maximum speed of 800 r.p.m. for 5 minutes.

The beaker containing the preparation is immersed in a bain-marie at 80°C for 50 minutes.

At the end of this period the preparation is allowed to cool by immersing the beaker in a bain-marie of running water at 15-20°C for 30 minutes.

The beaker is then put to 4°C in a cold store overnight. At the end of cooling, the gel formed within the beaker is removed and ground or formed into cubes for subsequent use.

### EXAMPLE 6

Sausage-like food product: pork mortadella.

A pork mortadella contains about 28% of lipids by weight with respect to the finished product: about 12% by weight comes from the pink part and about 16% by weight comes from the fat part (white part).

Complete replacement of the animal fat part with the composition being the object of the present invention enables a mortadella to be obtained which has about 12% of lipids from the pink part, a reduced caloric power (with respect to the traditional sausage-like product) and unaltered organoleptic features (with respect to the traditional sausage-like product).

### EXAMPLE 7

Sausage-like food product: pork salami.

One pork salami contains about 30% of lipids by weight with respect to the finished product: about 10% by weight comes from the red part and about 20% by weight comes from the fat part (white part).

Partial replacement of the animal fat part with the composition being the object of the present invention has enabled a salami to be obtained which has about 15-18% by weight of lipids with a reduced caloric power (with respect to the traditional sausage-like product) and with unaltered organoleptic features (with respect to the traditional sausage-like product).

### EXAMPLE 8

Sausage-like food product: pork-free mortadella.

A pork-free mortadella was prepared which contained a lean or low-fat part consisting of chicken or turkey meat corresponding to 60% by weight; 2.8% by weight of salt and flavours; the remaining part consisting of water; and 18% by weight of a food composition being the object of the present invention and comprising (on a total amount of 100 kg of water employed) : 2% by weight of carrageenin, 5% by weight of bovine meat gelatin, 15% by weight of milk proteins (75%-concentrated serum proteins), 3% by weight of calcium carbonate (bleaching agent), 10 g of sodium nitrate and 0.05% by weight of nitrite (preservative).

The sausage-like food product thus prepared has a lipid content (coming from chicken's and turkey's interstitial fat) corresponding to 5% by weight, with respect to the finished product, and unaltered organoleptic features.

## Claims

**1.** A food composition **characterized in that** it comprises:
- at least one vegetable polysaccharide;
- at least one animal gelatin; and
- at least one protein.

**2.** A composition as claimed in claim 1, wherein the polysaccharide is selected from: agar-agar, carrageenin, guar, xanthans and modified celluloses.

**3.** A composition as claimed in claim 2, wherein the polysaccharide is present in an amount included between 0.1 and 6% by weight.

**4.** A composition as claimed in at least one of the preceding claims, wherein the animal gelatin is selected from animal gelatins of bovine meats.

**5.** A composition as claimed in claim 4, wherein the gelatin is present in an amount in the range of 1 to 10% by weight.

**6.** A composition as claimed in at least one of the preceding claims, wherein the protein is selected from concentrated milk proteins, egg proteins, myofibril proteins and soybean proteins.

**7.** A composition as claimed in claim 6, wherein the protein is present in an amount in the range of 1 to 20% by weight.

**8.** A composition as claimed in at least one of the preceding claims wherein additives selected from the following compounds: preservatives, bleaching agents, flavouring essences, binding and colouring agents are additionally present.

**9.** A composition as claimed in claim 9, wherein the additive compound is selected from vegetable oils having a high unsaturation degree.

**10.** A process for preparation of the food composition as claimed in one or more of claims 1 to 9, said process comprising the following steps:
- preparing an aqueous dispersion comprising at least one vegetable polysaccharide, at least one animal gelatin and at least one protein;
- heating the prepared aqueous dispersion; and
- cooling said aqueous dispersion to obtain a gel.

**11.** A process as claimed in claim 10, wherein said at least one vegetable polysaccharide is added to an aqueous alkaline solution.

**12.** A process as claimed in claim 11, wherein subsequently to addition of said at least one polysaccharide, said at least one animal gelatin is added to said aqueous alkaline solution.

**13.** A process as claimed in claim 12, wherein subsequently to addition of said at least one animal gelatin, said at least one protein is added to said aqueous alkaline solution to obtain an aqueous dispersion comprising at least one vegetable polysaccharide, at least one animal gelatin and at least one protein.

**14.** A sausage-like food product **characterized in that** it comprises at least one meat component and a food composition according to one or more of claims 1 to 9.

**15.** A food product as claimed in claim 14, wherein the food composition is present in an amount included between 1 to 30% by weight, with respect to the food product.

**17.** A process for preparation of the sausage-like food product as claimed in one or more of claims 14 to 16, **characterized in that** it comprises a step in which said at least one meat component is admixed with the food composition according to one or more of claims 1 to 9.

**18.** Use of the food composition as claimed in one or more of claims 1 to 9 for preparation of a sausage-like food product having a reduced fat content.
